# EUROPÄISCHE PATENTSCHRIFT

(11) **EP 0 541 576 B1**
(45) Veröffentlichungstag und Bekanntmachung des Hinweises auf die Patenterteilung: **06.04.1994**
(21) Anmeldenummer: 91912544.3
(22) Anmeldetag: 06.07.1991
(51) Int. Cl.: B60R 25/10

(54) **KRAFTFAHRZEUG MIT EINER ZENTRALVERRIEGELUNGSANLAGE UND EINER DIEBSTAHL-ALARMANLAGE**
MOTOR VEHICLE WITH A CENTRAL LOCKING INSTALLATION AND A THEFT ALARM SYSTEM
VEHICULE AUTOMOBILE AVEC UN SYSTEME DE VERROUILLAGE CENTRAL ET UN SYSTEME D'ALARME ANTIVOL

(30) Priorität: 31.07.1990 DE 4024300
(43) Veröffentlichungstag der Anmeldung: 19.05.1993
(73) Patentinhaber: Dr.Ing.h.c. F. Porsche Aktiengesellschaft, 70435 Stuttgart (DE)
(72) Erfinder: BECHTLE, Rolf, D-7120 Bietigheim-Bissingen (DE); HÄCKER, Walter, D-7146 Tamm (DE)
(86) Internationale Anmeldenummer: EP9101264
(87) Internationale Veröffentlichungsnummer: WO9202390

(56) Entgegenhaltungen:
- US-A- 4 754 255
- ATZ AUTOMOBILTECHNISCHE ZEITSCHRIFT, Bd. 91, Nr. 6, Juni 1989, Stuttgart, Seiten 309-318; GUNTRAM HUBER: "Der neue Mercedes-Benz Roadster"
- RADIO PLANS, Nr. 460, März 1986, Seiten 27-33; H. TOUSSANT: "AlarmeAutomobile"
- PATENT ABSTRACTS OF JAPAN Vol. 9, No. 183 (M-400) (1906) 30 July 1985

## Beschreibung

Die Erfindung betrifft ein Kraftfahrzeug mit einer Zentralveriegelungsanlage und einer Diebstahl-Alarmanlage nach der Gattung des Anspruchs 1.

Ein Kraftfahrzeug mit einem verschließbaren und verriegelbaren Gepäckraum und wenigstens zwei Türen, welche durch eine Zentralverriegelungsanlage über eine Schloßbetätigung mittels schlüsselbetätigter Schlösser selbsttätig ver- bzw. entriegelbar sind, geht aus der DE- 88 46 369 U1 hervor. Die Zentralverriegelungsanlage wird mittels einer ersten Gruppe von Schaltkontakten an den Schlössern angesteuert. Eine Diebstahl-Alarmanlage überwacht einen Zugang zum Innenraum des Kraftfahrzeugs. Eine Alarmbereitschaft der Diebstahl-Alarmanlage wird durch die Schaltkontakte der ersten Gruppe von Schaltkontakten beim Verriegeln aktiviert und beim Entriegeln deaktiviert. Mittels zweiten Schaltkontakten, welche einen Zugang zum Fahrzeug oder dessen unerlaubte Benützung registrieren, erfolgt schließlich das Auslösen eines Alarms durch die alarmbereite Diebstahl-Alarmanlage.

Mit der DE- 38 21 561 Al ist eine Vorrichtung zur optischen Anzeige der Bereitschaft einer Fahrzeug-Alarmanlage bekannt geworden. Hierzu ist in wenigstens einem Verriegelungsknopf eines Schlosses einer Fahrzeugtür ein elektro-optisches Anzeigeelement eingesetzt, das bei alarmbereit geschalteter Diebstahl-Alarmanlage ein Blinksignal erzeugt. Das als Leuchtdiode ausgeführte Anzeigeelement wird im Impulsbetrieb mit einer im Verhältnis zum Blinkimpuls relativ langen Impulspause betrieben.

Weiter ist aus der US 4 754 225 eine benutzeridentifizierende Steuer- und Sicherungseinrichtungen für ein Fahrzeug bekannt geworden. Hierbei ist eine Alarmanlage für ein Fahrzeug offenbart, die mittels einer Fernbedienungeneinheit betätigbar ist. Ebenso kann eine im Fahrzeug angeordnete Zentralverriegelungsanlage ebenfalls mittels der Fernbedienungseinheit betätigt werden. Die Alarmanlage überwacht den Öffnungszustand von Motorhaube, Kofferraum und Fahrzeugtüren sowie das Fahrzeug auf Stöße, Bewegungen oder Glasbruch.

Bei den oben genannten Systemen ist es möglich, daß bei einer Fehlfunktion oder einer teilweisen Fehlfunktion der Zentralverriegelungsanlage die Alarmanlage und deren Funktionsanzeige dennoch aktiviert und die Alarmbereitschaft angezeigt wird, obwohl möglicherweise eine oder mehrere Türen oder sonstige Öffnungen des Kraftfahrzeugs nicht ordnungsgemäß verschlossen sind.

Es ist daher Aufgabe der Erfindung, ein Kraftfahrzeug mit einer Zentralverriegelungsanlage und einer Diebstahl-Alarmanlage zu schaffen, bei dem ein Betriebszustand der Zentralverriegelungsanlage und der Diebstahl-Alarmanlage sicher erkannt und angezeigt wird.

Die Aufgabe ist durch die kennzeichnenden Merkmale des Anspruchs 1 gelöst. Weitere, die Erfindung in vorteilhafter Weise ausgestaltende Merkmale sind in den Unteransprüchen enthalten.

Die Vorteile der Erfindung sind in erster Linie darin zu sehen, daß der Betriebszustand der Zentralverriegelungsanlage und der Diebstahl-Alarmanlage durch ein beiden Anlagen gemeinsames Steuergerät ermittelt und durch optisch unterscheidbare Blinksignale mittels elektrooptischer Anzeigeelemente in den Türverriegelungsknöpfen angezeigt wird. Hierbei werden wenigstens die Betriebszustände
- Diebstahl-Alarmanlage deaktiviert oder defekt
- Diebstahl-Alarmanlage aktiviert und Fahrzeug ordnungsgemäß verriegelt
- Diebstahl-Alarmanlage aktiviert und Fahrzeug nicht ordnungsgemäß verriegelt

unterschieden.

Die Erfindung ist beispielhaft anhand von Zeichnungen nachstehend näher erläutert.

Es zeigt
- Fig. 1: ein Blockschaltbild einer Zentralverriegelungsanlage und einer Diebstahl-Alarmanlage mit einem beiden Anlagen gemeinsamen Steuergerät,
- Fig. 2 bis 4: Impuls-Zeit-Diagramme von Blinksignalen.

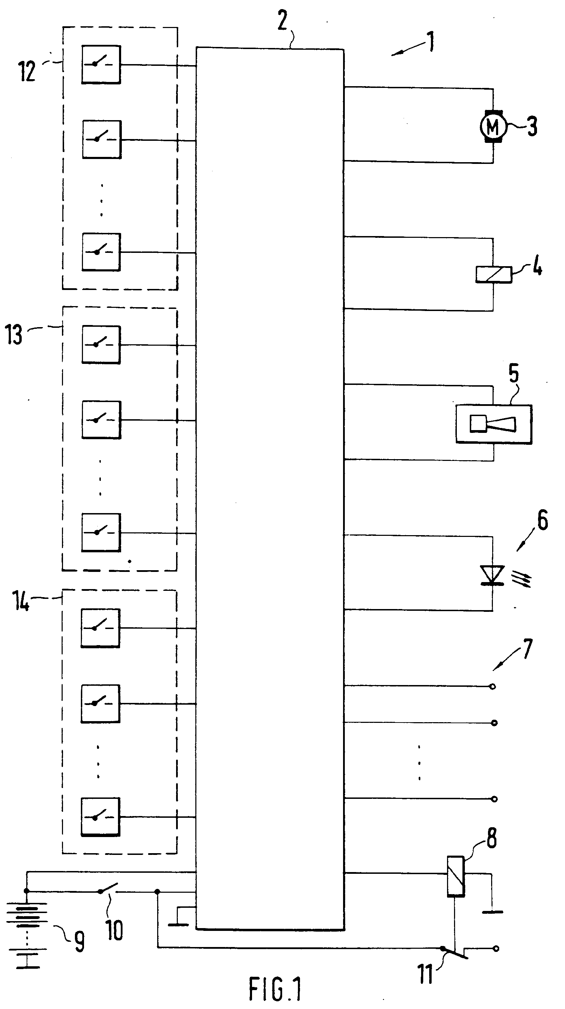

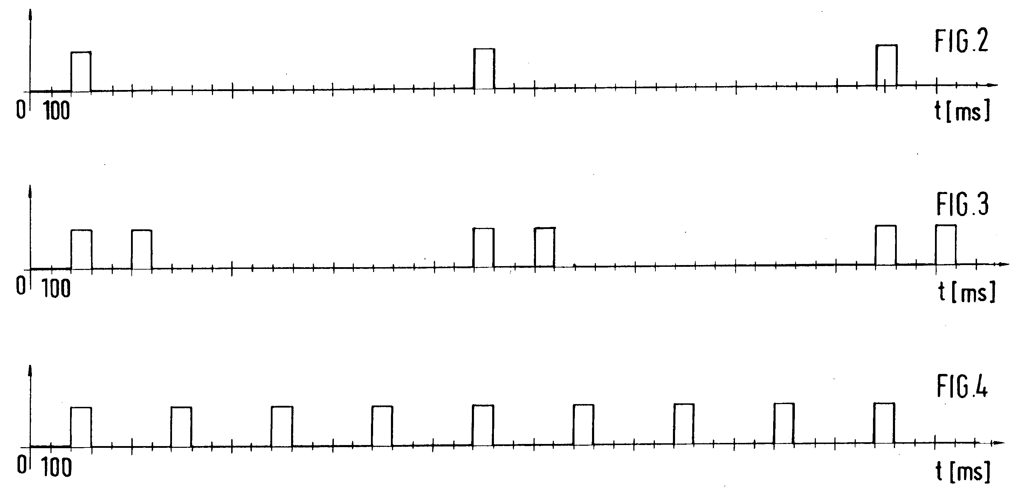

In Fig. 1 ist mit 1 eine Zentralverriegelungsanlage und eine Diebstahl- Alarmanlage gezeigt. Ein beiden Anlagen gemeinsames Steuergerät 2 steuert ein oder mehrere Elektromotoren 3 und/oder Elektromagnete 4 an, welche der elektromechanischen oder elektropneumatischen Verriegelung bzw. Entriegelung der Schlösser in den Türen und Deckeln (Gepäckraumdeckel, Tankdeckel, Motorhaube usw.) dienen. Vom Alarmanlagenteil werden ein oder mehrere Meldeorgane 5, wie z. B. eine Fahrzeughupe oder die Scheinwerfer oder Blinker des Kraftfahrzeugs angesteuert. Elektro-optische Anzeigeelemente, die bevorzugt als Leuchtdioden ausgeführt und in den Verriegelungsknöpfen der Fahrzeugtüren angeordnet sind, zeigen den Zustand der gesamten Anlage an.

Über weitere, vom Steuergerät 2 gesteuerte Ausgänge 7 können bei alarmbereiter Alarmanlage zusätzliche externe Überwachungselemente, beispielsweise zur Ultraschallüberwachung des Fahrzeuginnenraums (Bewegungsmelder) oder zum Feststellen, ob das Fahrzeug von einem Standort wegbewegt wird, aktiv gesteuert werden.

Schließlich dient noch ein vom Steuergerät angesteuertes Relais 8 der Wegfahrsicherung des Kraftfahrzeugs, in dem bei alarmbereit geschalteter Alarmanlage beim Einschalten des Zündstroms von einer Fahrzeugbatterie 9, beispielsweise über einen Zündschalter 10, der Zündstrom mittels eines Öffners 11 des Relais 8 unterbrochen wird; aufgrund dessen ist das Signal vom Zündschalter 10 eine Eingangsgröße des Steuergeräts 2.

Selbstverständlich wird das Steuergerät über die Fahrzeugbatterie 9 mit Strom versorgt. Zu Pufferzwecken kann ferner im Steuergerät 2 ein nicht gezeigter Akkumulator vorgesehen sein.

Eine erste Gruppe von Schaltkontakten 12 ist den schlüsselbetätigten Schlössern in wenigstens einem Paar der Fahrzeugtüren zugeordnet. Jeweils einer der Schaltkontakte der ersten Gruppe 12 wird beim Verriegeln der Schlösser und jeweils einer beim Entriegeln der Schlösser betätigt (aktivgesteuert). Durch das Aktivsteuern dieser Schaltkontakte erfolgt schließlich die Ansteuerung der Elektromotoren 3 bzw. Elektromagneten 4 zum Verriegeln bzw. Entriegeln der Fahrzeugzugänge. Ebenso kann mittels dieser ersten Gruppe von Schaltkontakten die Alarmbereitschaft der Diebstahl-Alarmanlage beim Verriegeln aktiviert und beim Entriegeln deaktiviert werden.

Eine zweite Gruppe von Schaltkontakten 13 dient der Überwachung des Zugangs zum Fahrzeug oder dessen unerlaubter Benutzung bei alarmbereit geschalteter Diebstahl-Alarmanlage. Mit diesen Schaltkontakten der zweiten Gruppe 13 werden insbesondere die Türen, der Kofferdeckel, die Motorhaube, ein Tankdeckel, ein Deckel eines Handschuhfachs, ein korrekter Einbau des Autoradios oder ein Öffnen eines beweglichen Dachteils oder (mittels der zusätzlichen, externen Überwachungselemente) Bewegungen des Fahrzeugs selbst oder von Gegenständen im Fahrzeug erfaßt. Das Auslösen der Alarmanlage und damit das Ansteuern der Meldeorgane 5 geschieht hierbei durch Überführen eines dieser Schaltkontakte der zweiten Gruppe 13 von einem inaktiven in den aktiven Zustand, beispielsweise durch Öffnen einer Fahrzeugtür. Hierzu können z. B. Türschalter für die Fahrzeuginnenbeleuchtung herangezogen werden.

Da jedoch die erste Gruppe von Schaltkontakten 12 lediglich das Ansteuern der Zentralverriegelungsanlage bewirkt und nicht auch deren korrekte Funktion überwachen kann (die Schaltkontakte sind als Tastschalter ausgeführt), ist eine dritte Gruppe von Schaltkontakten 14 vorgesehen, welche den Verriegelungszustand und den Entriegelungszustand des Kraftfahrzeugs bzw. aller Türen, Deckel ader deren Schlösser überwachen. Bleibt ein derartiges Erkennen des den Verriegelungszustand charakterisierenden Signals des oder der Schaltkontakte der dritte Gruppe 14 nach wenigstens einer Schlüsselbetätigung eines Schlosses in Verriegelungsrichtung durch einen der Schaltkontakte der ersten Gruppe 12 aus, so wird eine Aktivierung der Alarmanlage unterbunden und ein entsprechendes Warnsignal über die elektro-optischen Anzeigeelemente 6 in den Verriegelungsknöpfen abgegeben.

Bleibt das den Verriegelungszustand charakterisierende Signal wenigstens eines Schaltkontakts der dritten Gruppe 14 nach dem Erkennen einer Schlüsselbetätigung eines Schlosses in Verriegelungsrichtung durch einen Schaltkontakt der ersten Gruppe 12 aus, so kann die Aktivierung der Alarmanlage durch eine bestimmte Anzahl von (drei) Betätigungen des schlüsselbetätigten Schlosses innerhalb eines bestimmten, begrenzten Zeitraums in Verriegelungsrichtung auch bei wenigstens einer unverriegelten oder unverriegelbaren oder manuell verriegelten Fahrzeugtür ermöglicht werden.

Ebenso ist es möglich, nach dem manuellen Verriegeln aller Türen die Alarmbereitschaft der Alarmanlage durch eine Betätigung des schlüsselbetätigten Schlosses in Verriegelungsrichtung zu aktivieren, sofern der Verriegelungszustand aller Türen durch die Schaltkontakte der dritten Gruppe 14 erkannt wird.

Die Zentralverriegelungs- und Alarmanlage umfaßt ferner eine ganze Reihe weiterer Funktionen, die nachstehend erläutert werden sollen.

So kann z. B. nach Ablauf einer Ruhezeit nach Aktivieren der Alarmanlage ein Auslösen der Alarmanlage durch lediglich diejenigen Schaltkontakte der zweiten Gruppe 13 erfolgen, die während der ganzen Ruhezeit inaktiv waren (Türen geschlossen). Die übrigen Schaltkontakte können die Alarmanlage erst nach dem Übergang in den inaktiven Zustand bzw. nach einer danach gestarteten Ruhezeit auslösen.

Wird während einer Ruhezeit nach Aktivieren der Alarmanlage das Zündschloß 10 des Kraftfahrzeugs betätigt, so wird die Alarmanlage deaktiviert. Bei Betätigen des Zündschlosses 10 des Kraftfahrzeugs nach Ablauf der Ruhezeit wird der Zündstrom zu einer Brennkraftmaschine des Kraftfahrzeugs mittels des Relais 8 und des Öffners 11 unterbrochen und Alarm ausgelöst (Wegfahrsicherung).

Mit dem Betätigen eines den Gepäckraum des Kraftfahrzeugs verschließenden Schlosses in Entriegelungsrichtung wird eine bereits aktivierte Alarmanlage zumindest solange deaktiviert, wie der entsprechende den geöffneten Gepäckraum überwachende Schaltkontakt der zweiten Gruppe aktiv ist.

Ein externes Zusatzgerät zur Überwachung des Kraftfahrzeugs kann auf Bewegungen des Fahrzeugs selbst oder Bewegungen im Fahrzeug reagieren und über die Ausgänge 7 mit der Alarmanlage bzw. nach einer Ruhezeit aktiviert werden, sofern während der gesamten Ruhezeit alle Schaltkontakte der zweiten Gruppe 13 inaktiv waren oder nachdem nach Übergang aller Schaltkontakt der zweiten Gruppe 13 in den inaktiven Zustand die Ruhezeit erneut verstrichen ist. Mit dem Deaktivieren der Alarmbereitschaft wird auch das externe Zusatzgerät abgeschaltet.

Über die zweite Gruppe von Schaltkontakten 13 kann der Versuch eines Entriegelns der Tür bei aktivierter Alarmanlage überprüft und die Alarmanlage ausgelöst werden.

Das gemeinsame Steuergerät weist ferner eine Selbstdiagnosefunktion auf, die nach Aktivieren der Alarmanlage deren gesamte Funktionstüchtigkeit prüft. Fehler in der Zentralverriegelungs- oder Alarmanlage bzw. ausgelöste Alarme werden unter Erfassung der Randbedingungen bei ihrem Entstehen in einem Fehlerspeicher des Steuergeräts abgelegt. Ebenfalls im Fehlerspeicher notiert wird, wenn die Alarmanlage nur durch mehrmaliges Betätigen des schlüsselbetätigten Schlosses innerhalb eines bestimmten Zeitraums in Verriegelungsrichtung aktiviert werden konnte.

Schließlich ist vorgesehen, den Betriebszustand der Zentralverriegelungs- und Alarmanlage durch die Leuchtdioden in den Verriegelungsknöpfen anzuzeigen. Zur Kennzeichnung des jeweiligen Betriebszustandes werden die Leuchtdioden mit unterschiedlichen bzw. unterscheidbaren Blinksignalen angesteuert.

Das opto-elektronische Anzeigeelement wird beispielsweise nicht angesteuert (erster Betriebszustand), wenn die Diebstahl-Alarmanlage nicht aktiviert oder defekt ist oder wenn die Selbstdiagnose während der Ruhezeit Fehler erkennt oder bei fehlerloser Selbstdiagnose während der Ruhezeit die Zentralverriegelungsanlage nicht zu schließen ist und das schlüsselbetätigte Schloß nicht drei Mal innerhalb einer bestimmten Zeit in Verriegelungsrichtung betätigt wurde oder wenn aktive Schaltkontakte der zweiten Gruppe 13 beispielsweise geöffnete Fahrzeugtüren anzeigen.

Wenn bei korrekter Funktion der Anlage die Ruhezeit abgelaufen ist und alle Schaltkontakte der zweiten Gruppe 13 inaktiv sind, die Zentralverriegelung geschlossen ist und nicht dreimal kurz hintereinander abgeschlossen wurde und kein Alarm vorliegt, blinken die elektro-optischen Anzeigeelemente mit einer normalen Blinksequenz, bei der die Einschaltzeiten relativ kurz im Verhältnis zu den Ausschaltzeiten sind. Die Alarmbereitschaft der Diebstahl-Alarmanlage ist dann aktiviert (zweiter Betriebszustand).

Ein derartiges Blinksignal ist der Fig. 2 zu entnehmen. Sie zeigt Blinkimpulse mit einer impulsbreite von 100 msec., denen jeweils erste Impulspausen von 1900 msec Breite folgen.

Wurde die Zentralverriegelungsanlage kurzzeitig dreimal verriegelt, ohne daß während der Ruhezeit ein Fehler erkannt wurde, so wird über das elektro-optische Anzeigeelement ein doppeltes Blinksignal ausgegeben, bei dem diese zweimal kurz hintereinander, gefolgt von einer längeren Blinkimpulspause, angesteuert werden; die Alarmbereitschaft ist nicht aktiviert. Nach Ablauf der Ruhezeit wird die Alarmbereitschaft aktiviert, jedoch weiterhin das doppelte Blinksignal ausgegeben. Hierdurch wird angezeigt, daß entweder eine Tür nicht verriegelt ist oder das entsprechende Signal der dritten Gruppe von Schaltkontakten fehlt (dritter Betriebszustand).

Das zugehörige Blinksignal ist in Fig. 3 gezeigt. Zwei Blinkimpulsen von je 100 msec. Dauer, die in einem Abstand von 200 msec aufeinander folgen (zweite Impulspause) folgt eine dritte Impulspause von 1600 msec.

Ebenso erfolgt doppeltes Blinken, wenn nach Ablauf der Ruhezeit Schaltkontakte der zweiten Gruppe 13 aktiv sind und somit beispielsweise eine geöffnete Fahrzeugtür anzeigen. Schließlich erfolgt das doppelte Blinken während bzw. nach einer Alarmgabe.

In einem vierten Betriebszustand schließlich, in dem die Diebstahl-Alarmanlage aktiviert und das Fahrzeug ordnungsgemäß verschlossen und eine Ruhezeit noch nicht verstrichen ist, blinken die elektro-optischen Anzeigeelemente schnell, siehe Fig. 4. Einem sich wiederholenden Blinkimpuls von 100 msec. Dauer folgt jeweils eine vierte Impulspause von 400 msec. Dauer.

## Patentansprüche

1. Kraftfahrzeug mit wenigstens zwei Türen und einem verschließbaren und verriegelbaren Gepäckraum, wobei die Türen mittels einer Zentralverriegelungsanlage über eine Schloßbetätigung mittels schlüsselbetätigter Schlösser in einem Paar Türen Selbsttätig ver- bzw. entriegelbar sind und die Zentralverriegelungsanlage mittels einer ersten Gruppe von Schaltkontakten (12) an den Schlössem angesteuert werden und ein Zugang zum Innenraum des Kraftfahrzeugs mittels einer Diebstahl- Alarmanlage überwacht wird, wobei eine Alarmbereitschaft der Diebstahl-Alarmanlage durch die Schaltkontakte der ersten Gruppe von Schaltkontakten (12) beim Verriegeln aktiviert und beim Entriegeln deaktiviert wird, und das Auslösen eines Alarms durch die alarmbereite Diebstahl-Alarmanlage durch wenigstens einen von seinem inaktiven in den aktiven Zustand überführten Schaltkontakt von den Zugang zum Fahrzeug oder dessen unerlaubte Benutzung registrierenden Gruppe von zweiten Schaltkontakten (13) erfolgt, und die Alarmbereitschaft der Diebstahl-Alarmanlage durch ein elektro-optisches Anzeigeelement (6) in den Verriegelungsknöpfen durch Blinken angezeigt wird, **dadurch gekennzeichnet,** daß der Betriebszustand der Zentralverriegelungsanlage und der Diebstahl-Alarmanlage (1) durch ein beiden Anlagen gemeinsames Steuergerät (2) ermittelt wird und wenigstens die Betriebszustände
- Diebstahl- Alarmanlage deaktiviert oder defekt (erster Betriebszustand),
- Diebstahl- Alarmanlage aktiviert und Schlösser der Fahrzeuges ordnungsgemäß verriegelt (zweiter Betriebszustand) und
- Diebstahl- Alarmanlage aktiviert und Schlösser des Fahrzeuges nicht ordnungsgemäß verriegelt (dritter Betriebszustand)
unterschieden und durch optisch unterscheidbare Blinksignale mittels der elektro-optischen Anzeigeelemente in den Verriegelungsknöpfen angezeigt werden, wozu der Verriegelungszustand der Schlösser des Fahrzeuges durch das Steuergerät (2) mittels einer dritten Gruppe von Schaltkontakten (14) überwacht wird.

2. Kraftfahrzeug nach Anspruch 1, **dadurch gekennzeichnet,** daß im ersten Betriebszustand das elektro- optische Anzeigeelement nicht angesteuert wird.

3. Kraftfahrzeug nach Anspruch 1 oder 2, **dadurch gekennzeichnet,** daß im zweiten Betriebszustand das elektro- optische Anzeigeelement mit einem sich wiederholenden Impulssignal mit einer im Verhältnis zur Impulsbreite des Blinkimpulses relativ langen ersten Impulspause betrieben wird.

4. Kraftfahrzeug nach Anspruch 1, 2 oder 3, **dadurch gekennzeichnet,** daß im dritten Betriebszustand das elektro- optische Anzeigeelement (6) mit einem sich wiederholenden Impulssignal mit zwei durch eine kurze zweite Impulspause getrennten Blinkimpulsen, gefolgt von einer im Verhältnis zur Impulsbreite der Blinkimpulse relativ langen dritten Impulspause betrieben wird.

5. Kraftfahrzeug nach wenigstens einem der vorangehenden Ansprüche, **dadurch** **gekennzeichnet,** daß das Steuergerät (2) einen weiteren Betriebszustand der Zentralverriegelungsanlage und der Diebstahl- Alarmanlage (1) zu ermitteln vermag, in dem die Diebstahl- Alarmanlage aktiviert und Fahrzeug ordnungsgemäß ververriegelt ist und eine Ruhezeit nach Aktivieren der Diebstahl- Alarmanlage noch nicht verstrichen ist (vierter Betriebszustand).

6. Kraftfahrzeug nach wenigstens einem der vorangehenden Ansprüche, **dadurch** **gekennzeichnet,** daß im vierten Betriebszustand das elektro- optische Anzeigeelement (6) mit einem sich wiederholenden Impulssignal mit einem Blinkimpuls, gefolgt von einer vierten Impulspause betrieben wird, deren Impulsbreite länger als der Blinkimpuls oder die zweiten Impulspause, jedoch erheblich kürzer als die Impulsbreite der ersten oder dritten Impulspause ist.

7. Kraftfahrzeug nach wenigstens einem der vorangehenden Ansprüche, **dadurch** **gekennzeichnet,** daß das gemeinsame Steuergerät (2) eine Selbstdiagnosefunktion hat, die nach Aktivieren der Alarmanlage deren Funktionstüchtigkeit prüft.

## Claims

1. Motor vehicle having at least two doors and a closable and lockable luggage space, the doors being automatically lockable and unlockable by means of a central locking system by way of a lock operation by means of key-operated locks in a pair of doors and the central locking system being controlled by means of a first group of switching contacts (12) on the locks and an access to the interior of the motor vehicle being monitored by means of a theft alarm system, an alarm set state of the theft alarm system being activated on locking and deactivated on unlocking by means of the switching contacts of the first group of switching contacts (12), and the triggering of an alarm by the theft alarm system in the alarm set state being effected by means of at least one switching contact, which is transferred from its inactive state into the active state, of the group of second switching contacts (13) recording the access to the vehicle or the unauthorized use thereof, and the alarm set state of the theft alarm system being displayed by flashing by means of an electro-optical display element (6) in the locking buttons, characterized in that the operating state of the central locking system and of the theft alarm system (1) is determined by a control device (2) common to both systems, and at least the operating states
- theft alarm system deactivated or defective (first operating state),
- theft alarm system activated and locks of the vehicle properly locked (second operating state), and
- theft alarm system activated and locks of the vehicle not properly locked (third operating state)
are distinguished and displayed by optically distinguishable flashing signals by means of the electro-optical display elements in the locking buttons, to which end the locking state of the locks of the vehicle is monitored by the control device (2) by means of a third group of switching contacts (14).

2. Motor vehicle according to Claim 1, characterized in that in the first operating state the electro-optical display element is not triggered.

3. Motor vehicle according to Claim 1 or 2, characterized in that in the second operating state the electro-optical display element is operated with a repetitive pulse signal with a relatively long first interpulse period in relation to the pulse width of the flashing pulse.

4. Motor vehicle according to Claim 1, 2 or 3, characterized in that in the first operating state the electro-optical display element (6) is operated with a repetitive pulse signal with two flashing pulses separated by a short second interpulse period, followed by a third interpulse period which is relatively long in relation to the pulse width of the flashing pulses.

5. Motor vehicle according to at least one of the preceding claims, characterized in that the control device (2) is capable of determining a further operating state of the central locking system and of the theft alarm system (1) in which the theft alarm system is activated and the vehicle is properly locked and a rest period after activating the theft alarm system has not yet elapsed (fourth operating state).

6. Motor vehicle according to at least one of the preceding claims, characterized in that in the fourth operating state the electro-optical display element (6) is operated with a repetitive pulse signal with a flashing pulse, followed by a fourth interpulse period whereof the pulse width is longer than the flashing pulse or the second interpulse period, but is considerably shorter than the pulse width of the first or third interpulse period.

7. Motor vehicle according to at least one of the preceding claims, characterized in that the common control device (2) has a self-diagnosis function which after activating the alarm system checks the functioning thereof.

## Revendications

1. Véhicule automobile avec au moins deux portes et un coffre à bagages pouvant être fermé à clé et verrouillé, les portes pouvant être automatiquement verrouillées ou déverrouillées au moyen d'un système de verrouillage central par manoeuvre de serrures actionnées avec une clé dans une paire de portes et le système de verrouillage central étant commandé au moyen d'un premier groupe de contacts de commutation (12) sur les serrures et l'accès à l'habitacle du véhicule étant contrôlé au moyen d'un système d'alarme antivol, l'état de veille du système d'alarme antivol étant activé au verrouillage et désactivé au déverrouillage par les contacts du premier groupe de contacts de commutation (12), et le déclenchement d'une alarme étant assuré par le système d'alarme antivol en état de veille par au moins un contact de commutation, passé de l'état inactif à l'état actif, du groupe des seconds contacts de commutation (13), enregistrant l'accès au véhicule ou son utilisation non autorisée, et l'état de veille du système d'alarme antivol étant indiqué par le clignotement d'un élément d'indication (6) optoélectronique placé dans les boutons de verrouillage, caractérisé en ce que l'état de fonctionnement du système de verrouillage central et du système d'alarme antivol (1) est déterminé par un appareil de commande (2) commun aux deux systèmes et les états de fonctionnement suivants au moins
- système d'alarme antivol désactivé ou défectueux (premier état de fonctionnement),
- système d'alarme antivol activé et serrures du véhicule correctement verrouillées (deuxième état de fonctionnement) et
- système d'alarme antivol activé et serrures du véhicule non correctement verrouillées (troisième état de fonctionnement)
sont indiqués différemment et par des signaux clignotants pouvant être optiquement distingués au moyen des éléments d'indication optoélectronique placés dans les boutons de verrouillage, l'état de verrouillage des serrures du véhicule étant à cet effet contrôlé par l'appareil de commande (2) au moyen d'un troisième groupe de contacts de commutation (14).

2. Véhicule automobile selon la revendication 1, caractérisé en ce que dans le premier état de fonctionnement l'élément d'indication optoélectronique n'est pas commandé.

3. Véhicule automobile selon la revendication 1 ou 2, caractérisé en ce que dans le deuxième état de fonctionnement l'élément d'indication optoélectronique fonctionne avec un signal d'impulsion se renouvelant avec une première pause d'impulsion relativement longue par rapport à la largeur de l'impulsion de clignotement.

4. Véhicule automobile selon les revendications 1, 2 ou 3, caractérisé en ce que dans le troisième état de fonctionnement, l'élément d'indication (6) optoélectronique fonctionne avec un signal d'impulsion se renouvelant avec deux impulsions de clignotement séparées par une deuxième courte pause d'impulsion, suivie par une troisième pause d'impulsion relativement longue par rapport à la largeur des impulsions de clignotement.

5. Véhicule automobile selon l'une au moins des revendications précédentes, caractérisé en ce que l'appareil de commande (2) peut déterminer un autre état de fonctionnement du système de verrouillage central et du système d'alarme antivol (1), dans lequel le système d'alarme antivol est activé et le véhicule correctement verrouillé et un temps de repos après activation du système d'alarme antivol ne s'est pas encore écoulé (quatrième état de fonctionnement).

6. Véhicule automobile selon l'une au moins des revendications précédentes, caractérisé en ce que dans le quatrième état de fonctionnement le système d'indication (6) optoélectronique fonctionne avec un signal d'impulsion se renouvelant avec une impulsion de clignotement, suivie par une quatrième pause d'impulsion dont la largeur est plus longue que l'impulsion de clignotement ou que la deuxième pause d'impulsion, mais nettement plus courte que la largeur de la première ou de la troisième pause d'impulsion.

7. Véhicule automobile selon l'une au moins des revendications précédentes, caractérisé en ce que l'appareil de commande (2) commun a une fonction d'autodiagnostic qui après activation du système d'alarme contrôle son bon fonctionnement.
